(19) Europäisches Patentamt
European Patent Office
Office européen des brevets

(11) Publication number: 0 369 614 A1

# (12) EUROPEAN PATENT APPLICATION

(21) Application number: 89310775.5

(22) Date of filing: 19.10.89

(51) Int. Cl.5: A01N 47/18, A01N 25/28

(30) Priority: 18.11.88 GB 8827029

(43) Date of publication of application: 23.05.90 Bulletin 90/21

(84) Designated Contracting States: AT BE CH DE ES FR GB GR IT LI LU NL SE

(71) Applicant: IMPERIAL CHEMICAL INDUSTRIES PLC
Imperial Chemical House, Millbank
London SW1P 3JF(GB)

(72) Inventor: Brown, David Joseph
56 Ralphs Ride
Bracknell Berkshire(GB)
Inventor: Marrs, Gordon James
South Riding Belmont Park Road
Maidenhead Berkshire(GB)

(74) Representative: Bishop, Nigel Douglas et al
Imperial Chemical Industries PLC Legal Department: Patents PO Box 6 Bessemer Road
Welwyn Garden City Herts, AL7 1HD(GB)

## (54) Insecticidal compositions.

(57) The invention provides an aphicidal composition suitable for use as a concentrate for the preparation of a foliar spray, characterised in that the composition is a slow-release capsule suspension comprising, as active ingredient, an aphicide microencapsulated in suspended polyurea or polysiloxane particles, said aphicide being selected from the group of aphicides consisting of pirimicarb, dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone. The invention also provides processes for the preparation of the compositions and a method for their use in preventing or combating aphid infestations of plants.

EP 0 369 614 A1

## INSECTICIDAL COMPOSITIONS

This application relates to insecticidal compositions containing pirimicarb, suitable for use as concentrates for the preparation of aqueous sprays for foliar application, leading to improved persistence of pirimicarb on a target crop.

UK Patent specification No 1,181,657 describes pyrimidine derivatives having selective aphicidal activity. One particular compound according to the disclosure of UK 1,181,657 has the chemical structure:

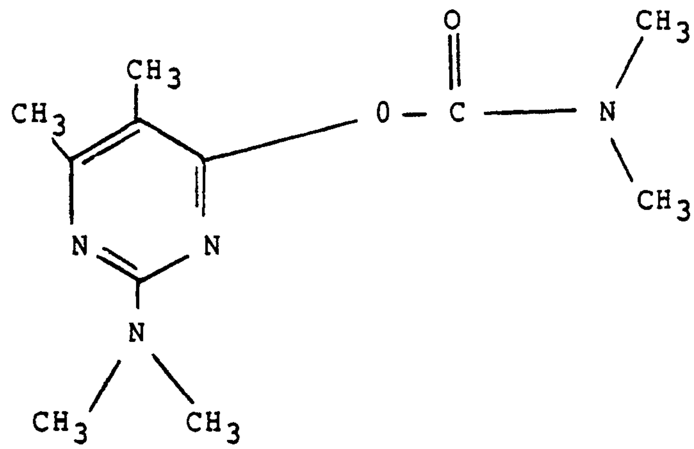

and is known by the common name pirimicarb.

Pirimicarb is a fast acting, carbamate aphicide which exhibits a rapid initial knockdown effect by fumigant action, and is widely used for the effective control of aphids in cereal and vegetable crops, sugar beet and top fruit. Pirimicarb provides rapid control of aphid pests, resulting in a quick clean-up of infestations and preventing the transmission of aphid-borne viral diseases of the target crop. Pirimicarb is traditionally supplied in the form of a concentrate suitable for dilution in water and application as a foliar spray. Any of the formulations under the heading "Concentrates for Dilution in Water" in the GIFAP Catalogue of Pesticide Formulation Types and International Coding System are suitable for foliar application of pirimicarb in this way. Examples of compositions which have proved effective include solid compositions such as wettable powders (WP) and water dispersible grains (WG), and liquid compositions such as emulsifiable concentrates (EC), suspension concentrates (SC) and capsule suspensions (CS).

Although the rapid control of aphid pests provided by these traditional compositions is satisfactory in most circumstances, the low persistence of the compound at the target crop resulting from traditional formulation types can lead to the possibility of re-infestation, resulting in the need for further applications to provide continued control.

We have now developed suspension compositions of pirimicarb, suitable for use as concentrates for the preparation of aqueous foliar sprays, containing additives which lead to greater persistence of the compound on the target crop, thereby preventing reinfestation of aphid pests, but which, surprisingly, retain the rapid initial knockdown and control observed with traditional compositions.

Accordingly, there is provided an aphicidal composition, suitable for use as a concentrate for the preparation of a foliar spray characterised in that the composition is a slow-release capsule suspension comprising, as active ingredient, pirimicarb microencapsulated in suspended polyurea or polysiloxane particles.

The slow-release compositions according to the present invention are toxic to and may be used in the control of aphid pests associated with agriculture or horticulture. They are of particular use for the control of aphid pests of cotton, cereal crops, vegetable crops, sugar beet and top fruit, for example Aphis gossypii, Sitobion avenae, Myzus persicae, Aphis fabae and Eriosoma lanigerum. They are also of particular use in preventing aphid-borne virus transmission, for example yellowing viruses of sugar beet, barley yellow dwarf virus of cereals and potato leaf roll virus of potatoes. In use, the compositions are diluted with water to form aqueous preparations which remain homogeneous for a sufficient time to enable them to be applied by conventional spray equipment to the pests, to the locus of the pest, to the habitat of the pests or to growing plants infested with or liable to infestation by the pests or to the medium in which the plants are growing. The compositions may contain from 5% to 85% by weight of pirimicarb, preferably from 10% to 20%, and

when diluted to form aqueous preparations, such preparations may contain varying amounts of the active ingredient depending on the purpose for which they are to be used. For agricultural and horticultural purposes, an aqueous preparation containing between 0.0001% and 0.1% of pirimicarb is particularly useful.

The compositions according to the invention are also suitable for admixture or tank mixture with one or more compositions containing additional active ingredients at the time of preparing an aqueous spray for foliar application. Suitable active ingredients for such admixture include alternative insecticides, insecticide synergists, herbicides, fungicides and plant growth regulators.

Slow-release suspension compositions according to the invention may be prepared as an aqueous suspension of polyurea microcapsules by the interfacial condensation polymerisation process described in Interfacial Synthesis Volume II, Polymer applications and Technology, editors F Millich and C E Carraher Jr, published by Marcel Dekker Inc. Using this process, a solution of pirimicarb in a polar, water immiscible solvent (for example para-chlorotoluene or methylcyclohexanone) containing an oil soluble, reactive monomer (for example toluene di-isocyanate) is emulsified in water. A second, water soluble, reactive monomer (for example ethylenediamine) is then added in order to form the capsule wall by reaction with the oil soluble monomer. The resulting suspension of polyurea particles in which pirimicarb is microencapsulated (capsule suspension) is stabilised by the addition of conventional anti-setting agents. A typical composition is given in Example 1:

| EXAMPLE 1 | |
|---|---|
| Slow-release capsule suspension | |
| Ingredient | % by weight |
| Pirimicarb | 10 |
| Methylcyclohexanone | 25 |
| Toluene di-isocyanate | 3 |
| Ethylenediamine | 1 |
| Diethylenetriamine | 2 |
| Polyvinyl alcohol | 2 |
| Sodium carboxymethylcellulose | 0.5 |
| Water | to 100% |

A further example of a slow-release capsule suspension composition according to the invention is an aqueous suspension of polyurea microcapsules prepared by the interfacial condensation polymersation process described in UK Patent Application No. 1,371,179. Using this process, a solution of pirimicarb in a water immiscible solvent, for example a heavy aromatic naphtha, is emulsified into water containing oil soluble monomers (for example toluene di-isocyanate and diphenylmethane-4-,4′-di-isocyanate). The intermediate mixture is heated to approximately 50°C and an interfacial reaction takes place between the oil soluble monomers and the aqueous phase to form the capsule wall. The resulting suspension of polyurea particles in which pirimicarb is microencapsulated (capsule suspension) is stabilised by the addition of conventional anti-settling agents. A typicial composition is given in Example 2.

| EXAMPLE 2 | |
|---|---|
| Slow-release capsule suspension . | |
| Ingredient | % by weight |
| Pirimicarb | 14 |
| Waxoline black 5BP+ (ultraviolet absorber) | 1 |
| Topanol O+ (antioxidant) | 1 |
| Toluene di-isocyanate | 3.2 |
| Diphenylmethane-4,4′-diisocyanate | 6.3 |
| Pluronic L 64+ (emulsifier) | 0.25 |
| Polyvinylalcohol | 2.0 |
| Daxad 23+ (protective colloid) | 1.5 |
| Xanthan gum | 0.1 |
| Proxel GXL + (biocide) | 0.1 |
| Attagel 50+ (clay) | 0.8 |
| Solvesso 200 + (alkylbenzene solvent) | 21.0 |
| Water | to 100% |

\+ = Registered trade marks

Capsule suspensions in which pirimicarb is microencapsulated in particles of a polysiloxane polymer also fall within the scope of this invention. A suitable general procedure for preparing such compositions is described in Proceed Int. Symp. Control. Rel. Bioact. Mater. 15, (1988) by Grüning et al. By this method, polysiloxane polymers are generated by the hydrolysis and subsequent condensation of alkoxysilanes in an emulsion containing an active ingredient to be microencapsulated. An improved formulation is prepared by dissolving pirimicarb and an organsilicon compound sold under the trade name V7280 or V7353 ( ex Goldschmidt AG, West Germany) in an alkylbenzene, solvent for example Solvesso 200. This solution is emulisified into water containing sodium dodecylbenzenesulphonate and dodecylbenzenesulphonic acid is added to the emulsified mixture. The mixture is then shear mixed for approximately 3 hours at the ambient temperature.

An Example of a capsule suspension using an organosilicon compound prepared by this method is illustrated in Example 3.

| EXAMPLE 3 | |
|---|---|
| Ingredient | % by weight |
| Pirimicarb | 13.0 |
| Alkylbenzene | 19.0 |
| Organosilicon compound V7280 or V7353 | 5.0 |
| Sodium dodecylbenzene-sulphonate | 2.3 |
| Dodecylbenzenesulphonic acid | 6.5 |
| water | to 100% |

Capsule suspension compositions prepared by any of the general methods mentioned above may optionally include further additives commonly used in the formulation art, for example stabilisers, UV absorbers, anti-settling agents, antioxidants, biocides etc. The choice of such additives depends on the nature of the materials used and the application of the composition and is within the normal skill of the formulator.

Capsule suspension compositions according to the invention when applied in the form of foliar sprays have been shown to lead to increased persistence compared with that obtained with traditional compositions.

This is illustrated in Examples 4 and 5.

EXAMPLE 4

Determination of Half-life of pirimicarb formulations by Accelerated Chemical Persistence Measurement.

Field persistence of pirimicarb applied both as compositions according to the invention and as standard compositions was measured by the determination of half-life using a laboratory accelerated technique. The compositions were diluted in water and sprayed onto glass slides using a track sprayer. The slides were allowed to air dry and a sample taken for analysis to determine the level of the initial pirimicarb deposit. The remaining slides were placed on a cooled tray fitted to a Heraeus Suntest apparatus, and subjected to the effect of a wind tunnel and constant artificial sunlight (xenon arc lamp). The slides were removed at intervals over a three day period and analysed for pirimicarb residue.

The results were used to determine values of half-life.

The half-life of the composition described in Example 2 was found by this method to be 12 hours compared with a half-life of 4 hours found for the standard 50% water dispersible grain composition of pirimicarb sold under the trade name "Aphox".

EXAMPLE 5

Assessment of Biological Activity and Persistence

In a greenhouse test, chinese cabbage plants were sprayed with diluted compositions according to the invention and with diluted standard compositions and then infested with Myzus persicae, in order to assess the toxicity of deposited pirimicarb both initially and after ageing. The results given in Table I demonstrate that the slow-release capsule suspension composition of Example 2 not only gives longer persistence and control than the standard wettable powder composition, but also, unexpectedly, gives equivalent initial control.

TABLE I

| COMPOSITION | APPLICATION RATE | % MORTALITY OF M persicae adults | | |
|---|---|---|---|---|
| | (ppm pirimicarb in spray) | Initial | 4DAT | 5DAT |
| Composition of Example 2 | 156 | 70 | 88 | 87 |
| Standard Composition * | 156 | 99 | 29 | 21 |

* Standard 50% WG composition sold under the trade name "Aphox"

The compositions described herein for improving the persistence of pirimicarb are also suitable for improving the persistence of other aphicides known in the art, and similarly lead to greater persistence of the aphicide, thereby preventing re-infestation by aphid pests but, surprisingly, with retention of the rapid initial knockdown and control observed with the traditional compositions. Accordingly, in a further aspect, the invention also provides an aphicidal composition, suitable for use as a concentrate for the preparation of a foliar spray, characterised in that the composition is a slow-release capsule suspension comprising, an active ingredient, an aphicide microencapsulated in suspended polyurea or polysiloxane particles, said aphicide being selected from the group of aphicides consisting of dimethoate, demeton-S-methyl, heptenophos, 1-(dimethylcarbamoyl)-3-t-butyl-5-carboethoxymethylthio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone.

## Claims

1. An aphicidal composition suitable for use as a concentrate for the preparation of a foliar spray, characterised in that the composition is a slow-release capsule suspension comprising, as active ingredient, pirimicarb microencapsulated in suspended polyurea or polysiloxane particles.

2. An aphicidal composition suitable for use as a concentrate for the preparation of a foliar spray, characterised in that the composition is a slow-release capsule suspension comprising, as active ingredient, an aphicide microencapsulated in suspended polyurea or polysiloxane particles, said aphicide being selected from the group of aphicides consisting of dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone.

3. An aphicidal composition as claimed in claim 1 or claim 2 containing from 5 to 85% of the active ingredient.

4. A process for the preparation of an aphicidal composition in the form of a slow-release capsule suspension which comprises interfacial polymerisation of one or more monomers in an emulsion containing an aphicide selected from the group of aphicides consisting of pirimicarb, dimethoate, demeton-S-methyl, heptenophos, 1-(dimethylcarbamoyl)-3-t-butyl-5-carboethoxymethyl-thio-1H-1,2,4-triazole, acephate, tefluthrin, chlorpyrifos, monocrotophos, fenitrothion, methomyl, oxydemeton-methyl, omethoate, pirimiphos-methyl, pirimiphos-ethyl, triazophos, profenofos, permethrin, cypermethrin, lambda-cyhalothrin, menazon and phosalone, to form a suspension of polymeric particles within which the aphicide is microencapsulated.

5. A process as claimed in claim 4 wherein polymerisation of the monomer or monomers forms polyurea particles within which the aphicide is microencapsulated.

6. A process as claimed in claim 4 wherein polymerisation of the monomer or monomers forms polysiloxane particles within which the aphicide is microencapsulated.

7. A method of preventing or combating an aphid infestation of a plant which comprises application to the foliage of the plant or to the medium in which the plant is growing an insecticidally effective amount of an aqueous composition prepared by aqueous dilution of an aphicidal composition as claimed in any one of claims 1 to 3.

European Patent Office

# EUROPEAN SEARCH REPORT

Application Number

EP 89 31 0775

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 008 207 (E.I. DU PONT DE NEMOURS & CO.) * Example 1; page 12, lines 22-32; page 15, lines 1-16; claims 1,2,17 * | 2-5,7 | A 01 N 47/18<br>A 01 N 25/28 |
| X | EP-A-0 183 999 (PENNWALT CORP.) * Page 4, lines 4-22; page 5, line 18 - page 6, line 13; example 1 * | 2-5,7 | |
| X | EP-A-0 214 936 (CIBA-GEIGY AG) * Page 1, paragraphs 1,2; page 3, paragraph 2; page 16, paragraphs 1-3; example 7 * | 2-5,7 | |
| X | EP-A-0 238 184 (THE WELLCOME FOUNDATION LTD) * Page 1, lines 1-10; page 2, lines 12-20; examples 1,2 * | 2-5,7 | |
| X | FR-A-2 429 616 (DOW CORNING CORP.) * Page 1, lines 1-8; page 3, lines 15-33; example 5 * | 2-4,6,7 | TECHNICAL FIELDS SEARCHED (Int. Cl.5) |
| D,X | GB-A-1 371 179 (STAUFFER CHEMICAL CO.) * Page 2, lines 44-109; page 5, lines 90-108; example 1; page 8, line 126 - page 9, line 76 * | 2-5,7 | A 01 N |
| Y | | 1 | |
| Y | GB-A-1 181 657 (IMPERIAL CHEMICAL IND.) * Page 1, lines 9-12; page 3, component no. 4; page 12, lines 39-49,70-120; page 13, lines 41-46, examples 32,33 * | 1 | |

The present search report has been drawn up for all claims

| Place of search | Date of completion of the search | Examiner |
|---|---|---|
| THE HAGUE | 22-02-1990 | MUELLNERS W. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)